# EUROPEAN PATENT SPECIFICATION

(11) **EP 2 277 736 B1**
(45) Date of publication and mention of the grant of the patent: **25.03.2015**
(21) Application number: 09305732.1
(22) Date of filing: 04.08.2009
(51) Int. Cl.: B60N 2/46, G05G 1/62, E02F 9/20

(54) **Control armrest structure.**
Struktur einer steuernden Armlehne
Structure d'accoudoir de commande

(30) Priority: 20.07.2009 DE 102009034154
(43) Date of publication of application: 26.01.2011
(73) Proprietor: CLAAS Tractor S.A.S., 78141 Vélizy-Villacoublay Cedex (FR)
(72) Inventor: Römer, Jens, 34549, EDERTAL (DE); Gaydon, Régis, 78000, VERSAILLES (FR); Gomez, Christophe, 92100, BOULOGNE-BILLANCOURT (FR); Gil Tierno, Frédéric, 92310, SEVRES (FR); Schutte, Benjamin, 32257, BÜNDE (DE); Desiles, Yohann, 75017, PARIS (FR)
(74) Representative: Casalonga, Axel

(56) References cited:
- WO-A-99/42327
- JP-A- 8 242 611
- JP-A- 2006 335 254
- US-A1- 2004 011 015
- US-A1- 2005 133 292

## Description

The invention relates to the organisation of controlling functions of a vehicle, and more particularly to a multifunctional armrest allowing control of a tractor.

A tractor used in agriculture can be quite complex to control as many parameters often need to be set and modified at substantially the same moment, especially if implements are towed behind or mounted on the tractor. The speed of the vehicle and the work-sequences need to be carefully and precisely controlled while maintaining the direction of the vehicle as wished.

In order to help the user, agricultural vehicles are usually provided with a display panel allowing to visualize the settings of the numerous parameters, such as ground speed, engine speed, status of transmission as well as extended information on the transmission, direction of travel, vehicle status information, fuel tank, engine temperature, front and rear linkages, control device settings, and working parameters.

Such a display panel can be set on the end of a armrest on which can be installed a few controlling means such as a joystick means and/or switches.

These many helping controlling means are unfortunately not usually positioned in the best way to allow long working sessions. The positioning of the different means does not allow having a high comfort reducing therefore working fatigue usually because of extra concentration needed to locate the means before being able to use it.

The document US 2004 011 015 A discloses an armrest structure, corresponding to the preamble of claim 1, which comprises an armrest body, a control board, a multifunctional grip and a movable display panel.

However, with such an armrest structure, the operator has to remove his hand from a resting position to an operating position if he wants to operate the multifunctional grip, which is very uncomfortable for the operator as he cannot put his hand on a support structure. Moreover, the position of the multifunctional grip in front of the display panel does not give a clear visibility of the display. Furthermore, in such a structure all the switches arranged on the control board can not be reached by the operator if he puts his arm on the armrest structure, as some of the switches are situated behind his hand.

Document US 2005/0133292 describes an operator control assembly for a work machine comprising an armrest, an operator interface and a base common to the armrest and operator interface. The operator control assembly comprises a Power-Take-Off control composed of a push-pull button and fixed in a depression area.

The present invention provides a solution to solve the different problems caused by the organisation of the controlling means on and around the armrest and therefore improve the ergonomics and comfort of the armrest.

Thus, the invention proposes a control armrest for use in controlling functions of a vehicle such as a tractor, comprising an armrest area, a control panel, a display panel and grip controlling means fixed on a movable support and having a top surface.

According to a general feature of the control armrest, it includes a depression area receiving the grip controlling means, the depression area being deep enough so that the top surface of the grip controlling means is level with the armrest area.

The control panel may preferably be at a level substantially above the top surface of the grip controlling means.

Preferably, the armrest area, the grip controlling means and the display panel may be substantially aligned, the grip controlling means being between the display panel and the armrest area.

The control armrest may preferably comprise further control means on the control panel, the control panel being located between the display panel and the armrest area and comprising the grip controlling means, and the further control means being reachable by the fingers of the user's hand while at least a part of his forearm is resting on the armrest area.

Advantageously, the further control means may be displayed in several groups, a first and a second groups being disposed substantially in the same alignment than the armrest area, the grip controlling means and the display panel, the first group of further control means being between the grip controlling means and the display panel, the second group being between the armrest area and the grip controlling means, and a third group being on a side of the grip controlling means away from the user.

Preferably, the first group of further control means may comprise buttons which can be activated by pressing, and the second group of further control means may comprise proportional control elements that can be activated in two directions.

The grip controlling means top surface comprises a hand rest area adapted to receive the user's hand for rest.

The grip controlling means may preferably comprise a plurality of primary buttons adapted to be reached by the fingers of the user's hand, his hand resting on the hand rest area.

The primary buttons can be organised on the top surface of the grip controlling means or on side surfaces of it.

Preferably, the grip controlling means may also comprise secondary buttons adapted to be reached by the fingers of the user's hand only if said hand departs from said hand rest area.

Advantageously, a tractor including an operator cabin comprising a seat with armrests can have one of his armrests being a control armrest.

Other advantages and characteristics of the invention will appear at the examination of the detailed description of a realization of the invention, being in no way limiting, and of the appended drawings on which:
- figure 1 illustrates schematically the inside of a agricultural vehicle;
- figure 2 illustrates schematically a view from above of a control armrest;
- figure 3 illustrates schematically a side view of a control armrest.

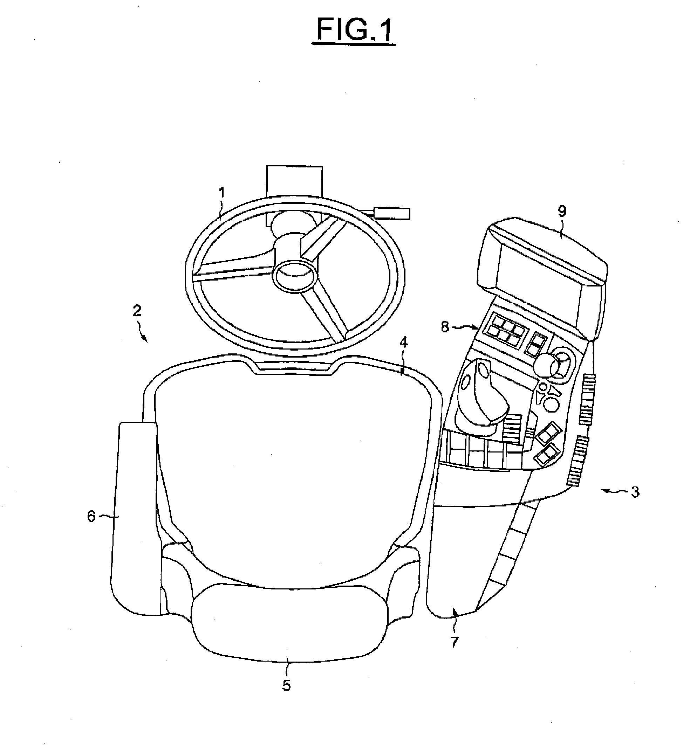

Figure 1 is a simplified scheme of an inside of an agricultural vehicle cabin, such as a tractor cabin. In this embodiment, the inside of the cabin comprises a steeving wheel 1, a seat 2 and a control armrest 3.

The seat 2 is composed of a sitting area 4, a back 5 and a left armrest 6, all designed for the comfort of the user, i.e. the driver of the tractor.

On the right hand-side of the seat 2 stands the control armrest 3 which comprises an armrest area 7 and a control panel 8. A display panel 9 is installed on the front end of the control armrest 3 away from the user so that it can be seen by the user without turning his head by angle above 90° from the forward direction.

The control panel 8 is positioned between the armrest area 7 and the display panel 9, the display panel 9 being positioned at the end of the control armrest 3.

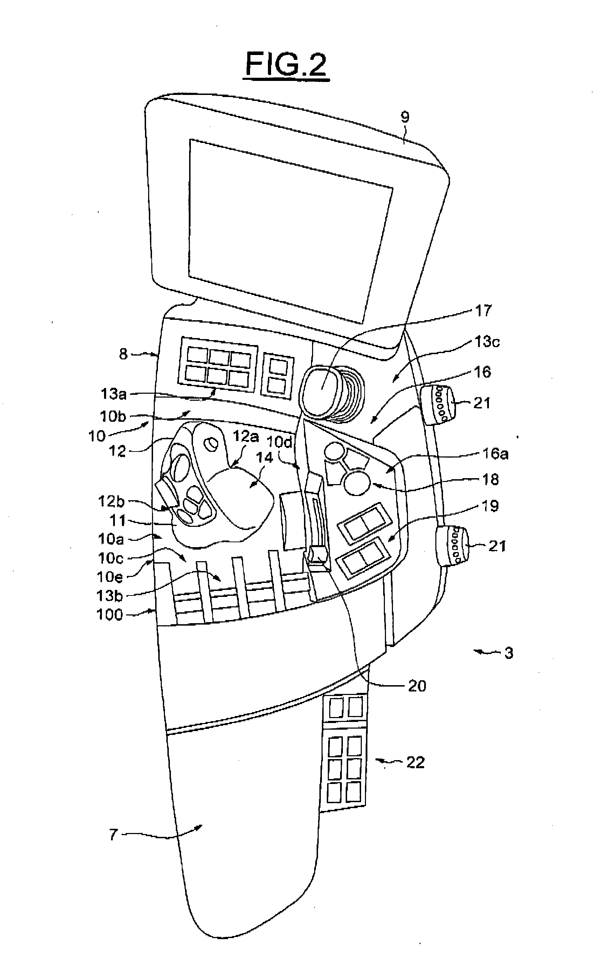

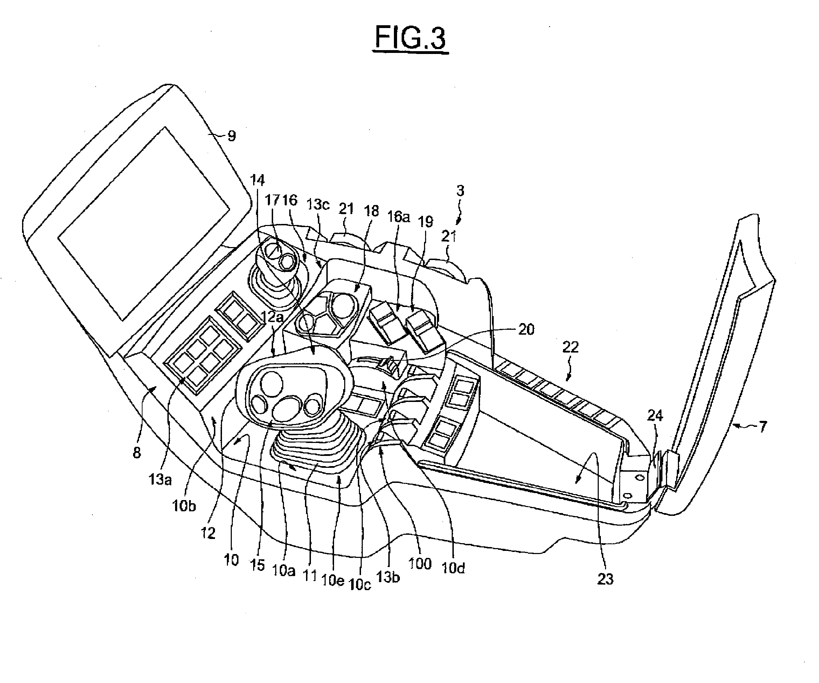

Figure 2 and 3 illustrate schematically a control armrest 3. As already shown in figure 1, the control armrest 3 is composed of an armrest area 7 and a control panel 8, and a display panel 9 is installed on the front end of it.

The armrest area 7 extends on the back section of the control armrest 3. It is long enough to allow the entire forearm of the operator to rest on it. Preferably, the length of the armrest area 7 corresponds approximately to half the length of the armrest structure 3, and is substantially equivalent to the length of the control panel 8. It comprises a soft surface enabling the user to rest his forearm an entire working day without hurting his forearm.

The display panel 9 is mounted with means for adjusting its vertical angle and its horizontal angle, enabling therefore the operator to adjust both angles according to his height and position to have the best visualisation of the display panel 9 with the less movement required of his head.

The control armrest is shaped so as to include a depression area 10. This depression area 10 is aligned with the display panel 9 and the armrest area 7 and comprises a movable support 11 on which are mounted grip controlling means 12.

The display panel 9 is at a level substantially above the top surface of the controlling means 10 in order to have a clear sight of the display panel 9, not at least partly obstructed by the grip controlling means 12.

The depression area 10 is shaped substantially as a square bowl wide enough to move properly the movable support in an entire stroke. It comprises a bottom zone 10a supporting the movable support 11, a front wall 10b between the grip controlling means 12 and the display panel 9, a rear wall 10c between the grip controlling means 12 and the armrest area 7, and a side wall 10d on the side of the grip controlling means away from the user.

The depression area 10 is opened on the side 10e facing the user so that the movable support can be also accessed from a side and to be able to easily clean the depression area 10.

The grip controlling means 12 are fixed on a movable support 11, such as a joystick, with a spring-return movement into a centre position. If the vehicle is equipped with a six power-shift transmission, the movable 11 support is used to change speed range, therefore gears. Thus, a stroke up of the movable support 11 will actuate a power-shift up, while a stroke down will actuate a power-shift down. In order not to have any unintentional power-shift due to an unintentional move of the movable support 11, the first 15%, for example, of the stroke in both directions are not taken into account to actuate a power-shift.

The grip controlling means 12 has a top surface 12a which is substantially parallel to the armrest area 7, and at least a side surface 12b parallel to and facing the opening side 10e of the depression area 10.

The top surface 12a is substantially at the same altitude level than the armrest area 7 so that the user can manipulate the grip controlling means on the moveable support 11 while being in a comfortable position as his forearm is able to rest on the armrest area 7 and his hand is aligned with his forearm.

Therefore, in this embodiment, the depression area 10 is deep enough so that the top surface 12a of the grip controlling means 12 is substantially at the same level than the armrest area 7.

On a back portion of its top surface 12a, the grip controlling means 12 comprises a hand rest area 14 on which the user can rest his hand. This hand rest area 14 is free of any buttons or means that can be activated, so that no unaware activation of a button or means can be realised as the user brings his hand to rest on this area.

The grip controlling means 12 also comprises a plurality of primary buttons 15. In this embodiment, the primary buttons 15 can be found on the side surface 12b of the grip controlling means, and on a front portion of the top surface 12a. The primary buttons 15 are adapted so that the user can reach with them his fingers while having his hand on the hand rest area 14. For example, without having to move his hand from the hand rest area 14 of the grip controlling means 12, the user can control different parameters of the vehicle by activating the primary buttons 15.

Thanks to different primary buttons, he can, for example, switch from forward to reverse driving orientation mode, and/or activate or deactivate a cruise control, and/or switch between a work configuration to a road configuration of the vehicle, and/or step up or down the speed range of a continuous variable transmission if the vehicle is equipped with. Rear and front hitch commands can also be found as primary buttons 15 of the grip controlling means 12, as well as an activating buttons for automatic steering, hydraulic pressure and flow activating buttons for connectors such as hydraulic valves. Finally, other primary buttons can be dedicated to record or program a sequence of several tractor functions governed by electric or electronic commands and/or stop a running sequence.

The grip controlling means 12 may also comprise secondary buttons being reachable by the fingers of the user's hand only if said hand departs from said hand rest area 14. These secondary buttons can not be seen on this figure. For example, a rocker switch controlling two secondary commands can be positioned on the front of the grip controlling means facing the front wall 10b.

In this embodiment, the control panel 8 includes the depression area 10 receiving the grip controlling means 12, and is positioned between the armrest area 7 and the display panel 9. It also comprises further control means divided, in this example of embodiment, in three groups 13a, 13b and 13c of further control means. The further control means are positioned on the control panel 8 in a position so that they can be reached by the fingers of the user's hand while at least a part of his forearm is resting on the armrest area 7.

The first 13a and the second 13b groups of further control means are substantially aligned with the armrest area 7, the grip controlling means 12 and the display panel 9.

The first group 13a of further control means is installed at substantially the same level than the grip controlling means 12 on the front wall 10b between the grip controlling means 12 and the display panel 9. It comprises buttons which can be activated by pressing them. The portion of the wall comprising the first group 13a of further control means can comprise a slope, such as a 45° slope, for example, in order for the user to be able to see the buttons.

The first group 13a of further control means is therefore substantially facing the grip controlling means 12, and more particularly the fingers of the user. Thus, the user can reach them more easily and faster. Indeed, the user only has to extend his fingers from a resting position on the grip controlling means 12 and move his arm slightly forth to reach the buttons.

In this illustrated embodiment, this first group 13a may comprise a toggle switch allowing changing the drive mode from six power-shift transmission to continuous variable transmission, or on a Continuous Variable Transmission version, the allowing changing the drive mode of the continuous variable transmission. It may also include buttons to which can be assigned any function according to the user. Memory buttons can also be found in this first group 13a to store different engine speed, as well as an increase button and a decrease button allowing increasing or decreasing of the engine speed recalled by activating one of the memory buttons.

The second group 13b of further control means is mounted substantially on the upper edge 100 of the rear wall 10c. In this illustrated embodiment, the second group 13b of further control means is composed of four proportional control elements. These proportional control elements are used to adjust the hydraulics flow rate in two connectors of each hydraulic valve. These elements are shaped as single axis joysticks. Each joystick is spring-returning to a centre position. Each comprises a fixed detent position at preferably the front end position which activates floating which is a specific functioning mode of the electro-hydraulic valve. These four elements are placed in parallel so that one to four elements can be controlled at the same time, a finger of the hand being used for each element.

Therefore, thanks to the position of the second group 13b of further control means, the proportional elements can be hooked by the fingers as the user's arm goes back before pulling back or pushing down the proportional control elements to control the hydraulic valves.

This upper edge 100 of the rear wall 10c has a round shape so as to follow the movement of the proportional control elements of the second group 13b of further control means.

The position of the first group 13a and the second group 13b relatively to the entire structure of the control armrest 3 can be modified if necessary. But the illustrated position has been determined as particularly advantageous in terms of ergonomics. Indeed, the first group 13a facing the fingers can be simply pressed by moving the arm forward, and the second group 13b includes elements which can be pulled or pushed which is simple with a backing movement of the hand from its hand rest position on the grip controlling means 12.

The third group 13c of further control means is mainly located on a surface aside 16 on the outside of the depression area 10 away from the user. The surface aside 16 is coupled to the side wall 10d of the depression area 10 and extends away from the user from this side wall 10d.

The control armrest 3 being on the right hand-side of the user, as shown in figure 1, the third group 13c of further control means is located on the right hand-side of the grip controlling means 12, on the surface aside 16. This location enables the user to have access to many more control parameters by a simple movement of the hand to its outside while having his forearm resting on the armrest area 7.

The surface aside can comprise a first portion 16a which altitude level is below the level of the armrest area 7. This way no buttons can be accidentally activated by a movement of the hand or by resting a hand on this part as if it was still the armrest area.

The third group 13c may comprise a two-axis joystick 17 which can control more than one hydraulic valve, the position, the height and the size of it being restricted to provide a good visibility of the display panel.

The third group 13c may also comprise display controlling means 18 composed of an incremental dial with pushbutton function allowing to navigate through the menu displayed on the display panel 9 and select an item displayed, and three additional buttons which lead to manipulations on the display panel 9 user interface, such as an escape button to return, for example, to a previous menu, a direct access button to access, for example, a general menu, and a information button, to get, for example, help on a item shown on the display panel 9.

The third group 13c can also include switches 19 for activating and deactivating the front and rear power take-off shaft, and a proportional hand throttle 20 to adapt the engine speed.

It can also include a neutral key, not shown on these figure, which sets the transmission in condition neutral.

The control armrest can also include additional control means such as height adjusting means 21 of the front and rear hitch that can be mounted on the outside of the control panel, and/or a additional buttons 22 on the side of the armrest area 7 which can activate parameters such as a four wheel drive mode button, a differential lock mode button, an automatic power take-off activation, and other optional parameters such as a suspended front axle mode button.

Thus, in this configuration, the grip controlling means and a majority of the further control means are substantially at a same level. Therefore, the majority of the different control parameters can be reached in a region centred on the grip controlling means 12 at a same level. The hand of the user substantially needs only to move in a two dimensional space to control the main parameters of the tractor.

However some of the further control means can be located in the depression area 10 next to the rim of the movable support, on a lower surface coupled to the three walls defining the depression area 10.

As it can be seen on figure 3, in this embodiment, the control armrest 3 may also comprise a store box 23 under the armrest area 7 accessible by lifting at least a part of the armrest area 7 the armrest area 7 being fixed on a side to the rest of the structure of the control armrest 3 by a hinge 24. The store box 23 can be used, for example to store items.

This control armrest has been described as being located on the right hand-side of the driver's seat. However, the control armrest can be symmetrically designed in order to be mounted on the left hand-side of the driver's seat if necessary, as, for example, in the case of left hand-side driving countries. A tractor can also be mounted with a cabin equipped with two control armrest 3, one on each side for example. The control armrest 3 can also be mounted without a display panel 9 fixed on it, the display panel being external of the control armrest 3.

## Claims

1. Control armrest (3) for use in controlling functions of a vehicle such as a tractor, comprising an armrest area (7), a control panel (8), a display panel (9), and grip controlling means (12) fixed on a movable support (11) such as a joystick and having a top surface (12a), **characterized in that** the control armrest (3) includes a depression area (10) receiving the grip controlling means (12), the depression area (10) being deep enough so that the top surface (12a) of the grip controlling means (12) is level with the armrest area (7), the grip controlling means top surface (12a) comprising a hand rest area (14) adapted to receive the user's hand for rest.

2. Control armrest (3) as claimed in claim 1, wherein the display panel (9) is at a level substantially above the top surface (12a) of the grip controlling means (12).

3. Control armrest (3) as claimed in claims 1 or 2, wherein the armrest area (7), the grip controlling means (12) and the display panel (9) are substantially aligned, the grip controlling means (12) being between the display panel (9) and the armrest area (7).

4. Control armrest (3) as claimed in claims 1 to 3, comprising further control means on the control panel (8), the control panel (8) being located between the display panel (9) and the armrest area (7) and comprising the grip controlling means (12), and the further control means being reachable by the fingers of the user's hand while at least a part of his forearm is resting on the armrest area (7).

5. Control armrest (3) as claimed in claims 1 to 4, wherein the further control means are displayed in several groups, a first (13a) and a second (13b) groups being disposed substantially in the same alignment than the armrest area (7), the grip controlling means (12) and the display panel (9), the first group (13a) of further control means being between the grip controlling means (12) and the display panel (9), the second group (13b) being between the armrest area (7) and the grip controlling means (12), and a third group (13c) being on a side of the grip controlling means (12) away from the user.

6. Control armrest (3) as claimed in claim 5, wherein the first group (13a) of further control means comprises buttons which can be activated by pressing, and the second group (13b) of further control means comprises proportional control elements that can be activated by moving them back or forth.

7. Control armrest (3) as claimed in claims 1 to 6, wherein the grip controlling means (12) comprises a plurality of primary buttons (15) adapted to be reached by the fingers of the user's hand, his hand resting on the hand rest area (14).

8. Control armrest (3) as claimed in claims 1 to 7, wherein the grip controlling means (12) comprises secondary buttons adapted to be reached by the fingers of the user's hand only if said hand departs from said hand rest area (14).

9. Agricultural vehicle such as a tractor including an operator cabin comprising a seat with armrests, one of the armrests being a control armrest (3) as claimed in claims 1 to 8.

## Patentansprüche

1. Steuerarmlehne (3) für den Gebrauch beim Steuern von Funktionen eines Fahrzeugs, wie zum Beispiel eines Schleppers, die einen Armlehnenbereich (7), ein Bedienfeld (8) ein Display (9) und ein Griffsteuermittel (12), das auf einem beweglichen Träger (11), wie auf einem Joystick befestigt ist und eine obere Fläche (12a) hat, umfasst, **dadurch gekennzeichnet, dass** die Steuerarmlehne (3) einen Vertiefungsbereich (10) aufweist, der das Griffsteuermittel (12) aufnimmt, wobei der Vertiefungsbereich (10) tief genug ist, damit die obere Fläche (12a) des Griffsteuermittels (12) mit dem Armlehnenbereich (7) bündig ist, wobei die obere Fläche (12a) des Griffsteuermittels einen Handablagebereich (14) umfasst, der angepasst ist, um die Hand des Benutzers zum Ablegen aufzunehmen.

2. Steuerarmlehne (3) nach Anspruch 1, wobei das Display (9) an einem Niveau im Wesentlichen oberhalb der oberen Fläche (12a) des Griffsteuermittels (12) liegt.

3. Steuerarmlehne (3) nach Anspruch 1 oder 2, wobei der Armlehnenbereich (7), das Griffsteuermittel (12) und das Display (9) im Wesentlichen gefluchtet sind, wobei das Griffsteuermittel (12) zwischen dem Display (9) und dem Armlehnenbereich (7) liegt.

4. Steuerarmlehne (3) nach Anspruch 1 bis 3, die ferner Steuermittel auf dem Bedienfeld (8) umfasst, wobei des Bedienfeld (8) zwischen dem Display (9) und dem Armlehnenbereich (7) liegt und das Griffsteuermittel (12) umfasst, und die weiteren Steuermittel von den Fingern der Hand des Benutzers erreicht werden können, während wenigstens ein Teil seines Vorderarms auf dem Armlehnenbereich (7) ruht.

5. Steuerarmlehne (3) nach Anspruch 1 bis 4, wobei die weiteren Steuermittel in mehreren Gruppen angezeigt sind, wobei eine erste (13a) und eine zweite (13b) Gruppe im Wesentlichen in derselben Fluchtung angeordnet sind wie der Armlehnenbereich (7), das Griffsteuermittel (12) und das Display (9), wobei die erste Gruppe (13a) weiterer Steuermittel zwischen dem Griffsteuermittel (12) und dem Display (9) liegt, die zweite Gruppe (13b) zwischen dem Armlehnenbereich (7) und dem Griffsteuermittel (12) liegt, und eine dritte Gruppe (13c) auf einer Seite des Griffsteuermittels (12) vom Benutzer entfernt liegt.

6. Steuerarmlehne (3) nach Anspruch 5, wobei die erste Gruppe (13a) weiterer Steuermittel Knöpfe umfasst, die durch Drücken betätigt werden können, und die zweite Gruppe (13b) weiterer Steuermittel proportionale Steuerelemente umfasst, die durch ihr Rückwärts- oder Vorwärtsbewegen betätigt werden können.

7. Steuerarmlehne (3) nach Anspruch 1 bis 6, wobei das Griffsteuermittel (12) eine Mehrzahl von Hauptknöpfen (15) umfasst, die angepasst ist, um von den Fingern der Hand des Benutzers erreicht zu werden, während seine Hand auf dem Handablagebereich (14) ruht.

8. Steuerarmlehne (3) nach Anspruch 1 bis 7, wobei das Griffsteuermittel (12) Nebenknöpfe umfasst, die angepasst sind, um von den Fingern der Hand des Benutzers nur erreicht zu werden, falls die Hand den Handablagebereich (14) verlässt.

9. Landwirtschaftliches Fahrzeug, wie zum Beispiel ein Schlepper, der eine Fahrerkabine aufweist, die einen Sitz mit Armlehnen umfasst, wobei eine der Armlehnen eine Steuerarmlehne (3) nach Anspruch 1 bis 8 ist.

## Revendications

1. Accoudoir de commande (3) servant à la commande des fonctions d'un véhicule tel qu'un tracteur, comprenant une zone d'accoudoir (7), un panneau de commande (8), un panneau d'affichage (9) et une poignée de commande (12) fixée sur un support mobile (11) comme un manche à balai et ayant une surface supérieure (12a), **caractérisé en ce que** l'accoudoir de commande (3) comprend un creux (10) accueillant la poignée de commande (12), le creux (10) étant suffisamment profond pour que la surface supérieure (12a) de la poignée de commande (12) soit de niveau avec la zone d'accoudoir (7), la surface supérieure de la poignée de commande (12a) comprenant une zone formant repose-main (14) adaptée pour recevoir la main de l'utilisateur afin qu'elle s'y repose.

2. Accoudoir de commande (3) selon la revendication 1, dans lequel le panneau d'affichage (9) est à un niveau situé substantiellement au-dessus de la surface supérieure (12a) de la poignée de commande (12).

3. Accoudoir de commande (3) selon la revendication 1 ou 2, dans lequel la zone d'accoudoir (7), la poignée de commande (12) et le panneau d'affichage (9) sont substantiellement alignés, la poignée de commande (12) étant entre le panneau d'affichage (9) et la zone d'accoudoir (7).

4. Accoudoir de commande (3) selon les revendications 1 à 3, comprenant en outre des moyens de commande sur le panneau de commande (8), le panneau de commande (8) étant situé entre le panneau d'affichage (9) et la zone d'accoudoir (7) et comprenant la poignée de commande (12), et les moyens de commande supplémentaires pouvant être atteints par les doigts de la main de l'utilisateur tandis qu'au moins une partie de son avant-bras repose sur la zone d'accoudoir (7).

5. Accoudoir de commande (3) selon les revendications 1 à 4, dans lequel les moyens de commande supplémentaires sont affichés en plusieurs groupes, un premier (13a) et un deuxième (13b) groupe étant disposés substantiellement dans le même alignement que la zone d'accoudoir (7), la poignée de commande (12) et le panneau d'affichage (9), le premier groupe (13a) de moyens de commande supplémentaires étant entre la poignée de commande (12) et le panneau d'affichage (9), le deuxième groupe (13b) étant entre la zone d'accoudoir (7) et la poignée de commande (12), et un troisième groupe (13c) étant sur un côté de la poignée de commande (12) éloigné de l'utilisateur.

6. Accoudoir de commande (3) selon la revendication 5, dans lequel le premier groupe (13a) de moyens de commande supplémentaires comprend des boutons qui peuvent être activés par pression, et le deuxième groupe (13b) de moyens de commande supplémentaires comprend des éléments de commande proportionnelle qui peuvent être activés en les faisant avancer ou reculer.

7. Accoudoir de commande (3) selon les revendications 1 à 6, dans lequel la poignée de commande (12) comprend une pluralité de boutons principaux (15) adaptés pour être atteints par les doigts de la main de l'utilisateur, sa main reposant sur la zone formant repose-main (14).

8. Accoudoir de commande (3) selon les revendications 1 à 7, dans lequel la poignée de commande (12) comprend des boutons secondaires adaptés pour être atteints par les doigts de la main de l'utilisateur seulement si ladite main s'éloigne de ladite zone formant repose-main (14).

9. Véhicule agricole tel qu'un tracteur comportant une cabine d'opérateur comprenant un siège muni d'accoudoirs, un des accoudoirs étant un accoudoir de commande (3) selon les revendications 1 à 8.
